# EUROPEAN PATENT APPLICATION

(11) **EP 2 446 855 A1**
(43) Date of publication of application: **02.05.2012**
(21) Application number: 10188816.2
(22) Date of filing: 26.10.2010
(51) Int. Cl.: A61D 17/00

(54) **Device for measuring a physiological parameter of an animal**

(71) Applicant: Anemon S.A., 2610 Saint-Imier (CH)
(72) Inventor: Brielmann, Claude, 2613, Villeret (CH); Kohler, Samuel, 3006, Bern (CH); Hug, Kurt, 2525, Le Landeron (CH); Biberstein, Olivier, 3032, Hinterkappelen (CH); Moccetti, Riccardo, 6807, Taverne (CH); Brielmann, Arnaud, 2502, Biel/Bienne (CH)
(74) Representative: AMMANN PATENTANWÄLTE AG BERN

(57) **Abstract**

The measuring device comprises:
- a housing (10, 11, 12), which is configured to be inserted into the vagina of an animal and to be removed therefrom after use,
- sensing means (25) for measuring at least one physiological parameter of the animal, the sensing means being arranged at least partially in the housing (9),
- transmitting means (13, 25) for a wireless transmission of sensing means data based on the measured physiological parameter to a receiver (50), and
- retaining means (15), which are configured to be inserted into the vagina and to retain the housing therein.

## Description

The present invention relates to a measuring device according to the preamble of claim 1.

In various applications, it is desirable to measure a physiological parameter of an animal, such as its body temperature, the contents of particular hormones, etc. Such parameters may be used for instance to determine the period of sexual receptivity in cows, which is known as "estrus" or "heat". The normal body temperature of a cow is about 39 degree Celsius. During the state of estrus, which lasts about 24 hours until the ovulation occurs, the temperature increases. The mean increase is typically about 0.5 degree Celsius and may be in the range of 0.3 to 1.0 degree Celsius. Apart from the temperature other physiological parameters, such as the contents of the hormones and the condition of the mucous membrane, change in the state of estrus.

Detection of the period of estrus is a prerequisite for a successful artificial insemination. Since the milk production of a cow increases after calving, the farmer is interested in controlling the cow's reproduction by artificial insemination. However, if this one fails, e. g. because it is done too late, one has to wait one estrus cycle before insemination may be tried again (about 21 days for cows). Apart from the loss of the insemination costs there may be a considerable loss of income, since during this waiting time the milk production decreases.

Other applications, in which the measurement of the animal's body temperature or other physiological parameters is useful, is detecting the state of illness.

From the US patent application US 2002/0156394 A1 a measuring device is known for measuring intra-vaginally the temperature. The device has a cylindrical housing to be introduced into the animal's vagina and an external antenna end configured to be attached to the animal's tail. This configuration has the disadvantage that the housing may easily change its position in the vagina or even fall out therefrom, such that the temperature is not measured correctly.

It is an aim of the present invention to provide for a measuring device which allows at least one physiological parameter of an animal to be measured intra-vaginally in a reliable manner.

This aim is achieved by a measuring device as defined in claim 1. The provision of retaining means which are configured to be inserted into the vagina and to retain the housing therein guarantees a correct intra-vaginal position of the housing and thus a reliable measurement of one or more physiological parameters.

The further claims specify preferred embodiments of the measuring device and a system comprising at least one measuring device.

The invention is explained in the following by means of an exemplary embodiment with reference to Figures. In the drawings:
Fig. 1 shows a perspective view of a measuring device according to the invention, wherein only part of the antenna is shown;
Fig. 2 shows a partly sectioned side view of the measuring device according to Fig. 1;
Fig. 3 shows an explosive view of the measuring device according to Fig. 1;
Fig. 4 shows a partly sectioned side view of an applicator for introducing the measuring device according to Fig. 1; and
Fig. 5 shows the application of the measuring device according to Fig. 1 in a system for sending a message to a cellular phone.

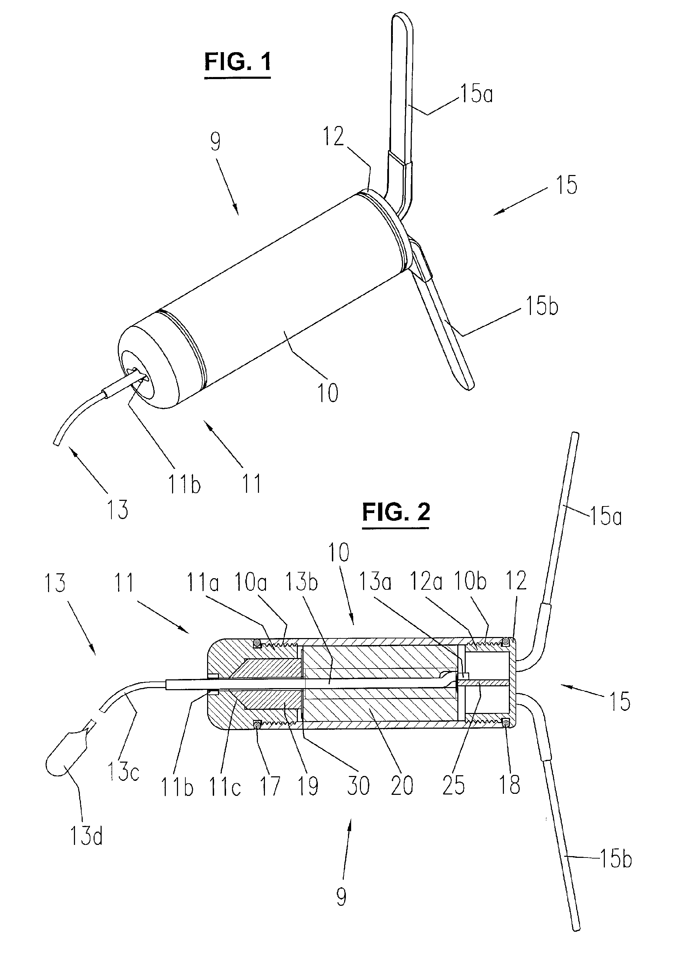

As shown in Fig. 1, the measuring device comprises a housing 9, which includes a cylindrical sleeve 10, whose two ends are closed with a cap member 11 and an end member 12, respectively. The cap member 11 is attached to the forward end of the sleeve 10 and includes a through hole 11b, through which an antenna 13 passes to extend outward. Retaining means 15 are held on the end member 12, which is attached to the rearward end of the sleeve 10. The retaining means 15 are in the form of wings 15a, 15b projecting laterally over the housing 9. The present exemplary embodiment comprises two wings 15a and 15b, which form together with the housing 9 a T configuration. Depending on the application of the measuring device, it is also possible to provide it with only one wing or with three or more wings and/or with other forms of retaining means.

As can be seen in Fig. 2, the cap member 11 includes a threaded part 11a, which is screwed in a forward thread 10a formed in the forward end of the sleeve 10. Thus, the cap member 11 is releasably attached to the sleeve 10 and can be removed therefrom to allow access to the interior of sleeve 10 if need be, for example to replace an enclosed energy source.

The retaining means 15 are releasably attached to the sleeve 10 and can be replaced if need be. For this purpose, the end member 12 includes a threaded part 12a, which is screwed in a rearward thread 10b formed in the rearward end of the sleeve 10. It is also conceivable to configure the part 12a of the end member 12 and the rearward end of the sleeve 10 such that the part 12a can be press-fitted into sleeve 10.

The measuring device may be exposed to various liquids such as vaginal liquids, urine, cleaning liquids, e. g. water when the measurement device is cleaned, etc. In order to avoid such liquids from entering into the interior of the housing 9, the measuring device includes the following sealing means 17-19, which are elastically deformable:
- a forward O-ring 17 arranged between the cap member 11 and the forward end of the sleeve 10 for sealing the threads 11a, 10a,
- a rearward O-ring 18 arranged between the end member 12 and the rearward end of the sleeve 10 for sealing the threads 12a, 10b, and
- a sealing body 19 for sealing the gap between the portion of the antenna 13 which passes through the hole 11b and the walls which define the through hole 11b.

The sealing body 19 has a tapered end, which is received in a recess 11c having a contraction formed in the cap member 11. The end of the sealing body 19 opposite to its tapered end contacts an element 30, which rests against an element 20 fixed in the sleeve 10. By screwing the cap member 11 into the sleeve 10, the latter acts via the elements 20, 30 on the sealing body 19 such that its tapered end is pressed into the recess 11c and the through hole 11b is sealed.

Other shapes of the sealing body 19, e. g. a cylindrical shape, are also conceivable to seal the through hole 11b.

The antenna 13 comprises a rearward end 13a, a shielding portion 13b, a radiation portion 13c, and a stopper 13d.

The rearward end 13a is attached to an electronic circuit 25. The shielding portion 13b extends from the rearward end 13a through the hole 11b out of the housing 9 and is formed by a coaxial cable. The radiation portion 13c, which is flexible, extends from the end of the shielding portion 13b to the stopper 13d and serves for emitting radio waves. The mean diameter of the radiation portion 13c is smaller, in particular much smaller than the mean diameter of the housing 9 and/or smaller than half of the mean diameter of the housing 9. In the present exemplary embodiment the radiation portion 13c is formed by the wire only of the coaxial cable 13b and acts as a monopole.

The length of the shielding portion 13b and the length of the radiation portion 13c are chosen with respect to an optimized emission of the radio waves. Typically, the length of the radiation portion 13c is greater than half of the length of the housing 9 and/or greater than the length of the housing 9.

Preferably, the antenna 13 is tightly fixed to the housing 9 such that the measuring device which is introduced in the vagina of an animal can be removed by pulling on the end of the antenna 13.

The stopper 13d, whose mean diameter is greater than the mean diameter of the through hole 11b and greater than the mean diameter of the radiation portion 13c, prevents the cap member 11 from falling off the end of the antenna 13 when the cap member 11 is removed from the sleeve 10.

The portion of the antenna 13 which projects outward of the housing 9 may be provided with a coat for protecting it from dirt, damage and so forth.

The electronic circuit 25 is arranged in the rearward end of the housing 9 and comprises a temperature sensor, a processing unit and a transmitter.

The temperature sensor has a good thermal contact with the wall of the end member 12 and thus measures its temperature, which - after introduction of the measuring device - corresponds to the body temperature of the animal. The sensor may be chosen e. g. such that it can sense a temperature change of 0.2 degree Celsius, of 0.1 degree Celsius or even more accurate.

The processing unit includes e. g. a microcontroller and is configured to receive the signals from the temperature sensor and to process them into sensor data. The processing unit may be configured such that the sensor data include apart from data on the temperature additional data, e. g. an identification number assigned to the measuring device, information on the status of an energy source unit as explained below, etc. Optionally, the sensor data may be encoded by the processing unit for a coded transmission.

The transmitter is configured to receive the sensor data from the processing unit and to transmit them via the antenna 13 to an external receiver. The transmitter includes e. g. an oscillator, a modulator, and an amplifier.

The processing unit is configured such that it causes the transmitter to emit periodically sensor data. The period of emission may be changed in time in order to save energy. For instance, if the measuring device is not introduced into the animal's vagina and therefore not in use, the temperature measured by the measuring sensor is the ambient temperature, which is lower than the body temperature of the animal. Thus, the processing unit may be configured such that the time interval Te between successive emissions of sensor data is increased when the temperature measured is below a predetermined threshold.

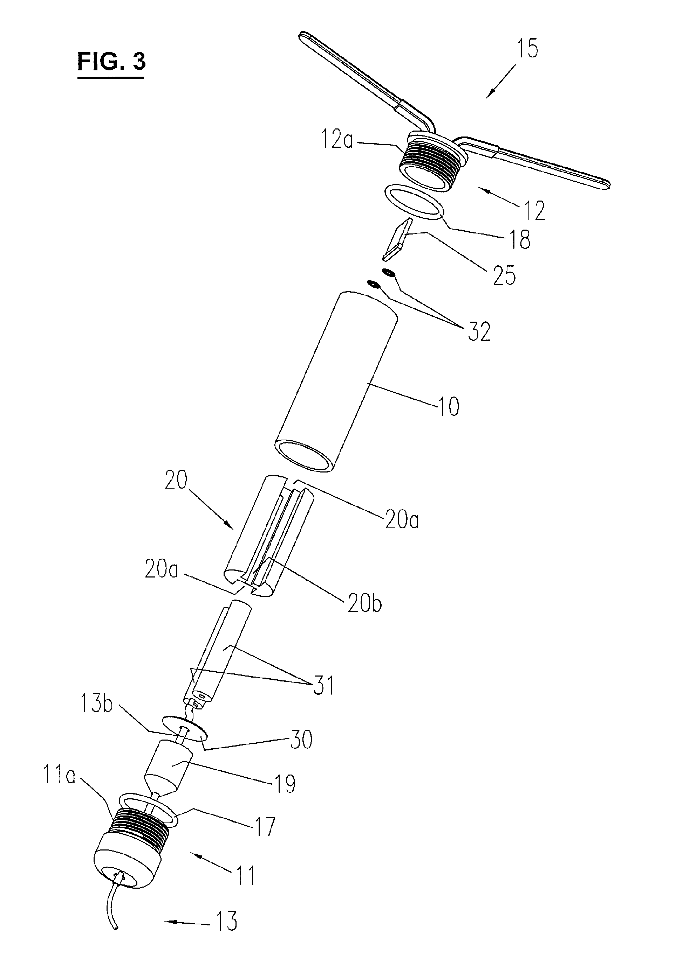

As is shown in Fig. 3, the measuring device comprises further an energy source unit 30-32 for feeding the electronic circuit 25 with energy. The energy supplied by the energy source unit 30-32 can originate from energy which is produced externally and stored afterwards, or from energy which is produced internally by means of a process of energy harvesting. In the present exemplary embodiment, the energy source unit 30-32 comprises one, two or more batteries 31, which are contacted which each other at their forward ends by means of the element 30, which serves as a contacting plate. At their rearward ends the batteries 31 are connected to the electronic circuit 25 by means of two conductive springs 32.

The element 20, which is press fitted in the sleeve 10, serves as a support member for the batteries 31. It has two recesses 20a and a groove 20b, each extending in the lengthwise direction of the support member 20. The recesses 20a are for receiving the batteries 31, whereas the groove 20b is for receiving the antenna's shielding portion 13b, which extends through a hole in the contacting plate 30.

The housing 9 and the retaining means 15 are made from a biocompatible material, e. g. plastics, such that it is suitable for exposure to the body and the bodily liquids for a certain period of time, e. g. one month, two months or longer. For use in particular in an animal's vagina, the material chosen does not have negative effects on the mucous membrane. To avoid an injury of the tissue, the edges of the housing 9 and the retaining means 15 are rounded off.

The material, in particular of the housing 9, is chosen such it may be subjected to pronounced mechanical stresses without breakage.

Optionally, the surface of the housing 9 and/or of the retaining means 15 is covered with an additional layer which is also biocompatible and suitable for exposure to the body and bodily liquids, but softer than the surface. The use of a particular soft layer reduces the risk of damaging the mucous membrane, when the measuring device is used for a longer period of time.

The retaining means 15 are configured such that the maximal diameter of measuring device can be reduced when it is introduced into the animal's vagina. In the present exemplary embodiment, the wings 15a, 15b of the retaining means 15 are elastic such that they can be bent in the lengthwise direction of the housing 9, wherein bending can be done multiple times. This elastic feature can e. g. be achieved by making the whole wing 15a, 15b elastic or at least one portion, for instance the portion where the wing 15a, 15b is attached to the end member 12. The elasticity of the retaining means 15 allows on the one hand the introduction of the measuring device by means of an applicator and, on the other hand, the removal of the measuring device out of the animal's vagina by simply pulling on the housing 9.

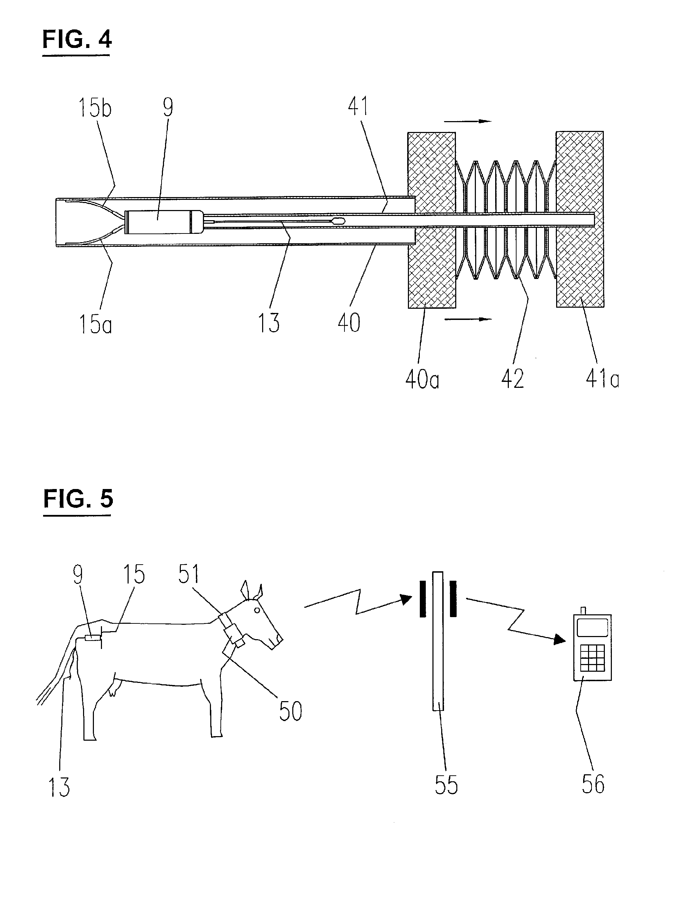

A suitable applicator for introducing the measuring device is shown in Fig. 4. It comprises an introduction sleeve 40, which is configured to receive the measuring device and to be introduced into the animal's vagina. As can be seen, the wings 15a, 15b are bent forward. The applicator further comprises a stopper 41, which projects into the sleeve 40 and which includes a hollow space for receiving the antenna 13. The rearward end of sleeve 40 and the rearward end of stopper 41 are provided each with a handling part, 40a and 41a, respectively, and are connected by spring means 42. In use, the sleeve 30 is introduced in the animal's vagina and - when positioned in the correct place - retracted by moving it relatively to the stopper 41. Thereby the housing 9, which rests against the stopper 41, remains at the same position, and - due the elasticity - the wings 15a, 15b are bent outwardly, such that the measuring device is held in the animal's vagina.

As can be seen in Fig. 5, the antenna 13 of the measuring device projects out of the animal's body. The sensor data emitted by the antenna 13 are received by an external system unit 50. In the present exemplary embodiment, this system unit 50 is attached to the animal's body by means of a collar 51 and comprises a transceiver, which includes a receiver for receiving the sensor data from the measuring device and a transmitter for emitting message data. The system unit 50 includes a watertight housing, which is received in a pocket on the collar 51.

The transceiver of system unit 50 is configured such that it may send the message data to a cellular phone 56 via an existing network 55 for mobile telephony. The transceiver includes e. g. a GSM/GPRS module that enables communication over the GSM network. The message data may be sent e. g. in form of an SMS text.

One system unit 50 may be used to receive sensor data of several measuring devices and to send message data to the network 55.

The system unit 50 comprises further an energy source, e. g. a battery, and a data memory for storing the sensor data and/or message data. Storing is for instance necessary, when the animal is temporarily in a place where there is no connection to the network 55, such that the message data are to be sent at a later time when there is a connection.

The system unit 50 is configured such that it periodically checks during a time period Te' whether sensor data are sent. The time period Te' is chosen greater than the time interval Te between successive emissions of sensor data of the measuring device. Thus, it is not necessary to synchronize the time of emission by the measuring device and the time of checking by the system unit 50.

In the present exemplary embodiment, the system unit 50 comprises further an activity sensor, which measures the activity of the animal and thus provides one or more additional parameters for determining the animal's status. These parameters may reflect e. g. the numbers of steps which the animal makes in a certain amount of time. This number is e. g. zero when the animal is lying.

The system unit 50 is configured to produce, out of the sensor data received and the data of the activity sensor, message data. For this purpose, the system unit 50 comprises a suitable computer system, e. g. a microcontroller.

Message data are sent for instance in the following situations:
- When the animal is in the state of estrus. This is in particular the case, when the temperature measured by the measuring device and processed by appropriate algorithms reaches certain conditions. Optionally, the measured parameters of the activity sensor can be taken into consideration to determine the estrus-state.
- The temperature measured is above a certain threshold, which indicates an illness state.
- The temperature measured is below a certain threshold, which indicates that the measuring device is not correctly positioned or even fallen out of the animal's body.
- The voltage of the energy source unit of the measuring device and/or of the system unit 50 is below a certain threshold, which indicates that the energy source unit is to replaced.

The user, e. g. a breeder, merely needs an ordinary cellular phone to receive and read the message data.

Optionally, the system unit 50 may be configured such that it can communicate with a server by wireless transmission.

To enter the telephone number of the cellular phone and/or other parameters the system unit 50 needs to be accordingly configured. This may be done e. g. by means of a computer such as a PC. For connection to the computer, the system unit 50 comprises one or more connections, e. a. a plug-type connection such as an USB connection. It is also possible to configure the system unit 50 by means of the network 55. A configuration center for instance sends an appropriate SMS message to the system unit 50 to configure it.

The measuring device and the system unit can be used, among others, to detect accurately the beginning of the estrus-state and thus to determine the optimum time for an artificial insemination. This brings along various advantages: detection is done automatically so that the farmer does not need to observe the animals, the costs for the insemination is reduced due to its high success rate, and the milk production of a cow can be optimized.

Depending on the purpose of application, the measuring device and the system unit can be adapted to be used for various animals, e. g. production animals and/or breeding animals such as cow, sheep or other mammals, animals in a zoo, etc. The measuring device and the system unit can be adapted such that based on the measured parameters specific physiological states of the animal can be detected, e. g. when the estrus-state begins, when the animal has a disease, and/or when a pregnant animal begins to give birth.

Apart from the temperature sensor it is conceivable to use other sensing means to measure at least one physiological parameter of an animal. Possible sensing means are:
- means for measuring the contents of one or more hormones, in particular hormones which are indicative for an estrus-state; such sensing means comprise e. g. a surface which can be contacted with the mucous membrane and which is connected to an evaluating unit arranged in the housing 9;
- means for measuring the electrical resistivity of the vagina's mucous membrane; such sensing means comprise e. g. two conductive electrodes which are arranged at a predetermined distance from each other on the outer surface of the housing 9 and which are connected to an evaluating unit arranged in the housing 9.

In the embodiment shown in Fig. 2 the retaining means 15 are attached to the end member 12 such that the wings 15a, 15b are bent outwards. It is also conceivable to configure the retaining means 15 and the end member 12 such that the retaining means extend radially outwards between the sleeve 10 and the end member. In this configuration, one or more straight wings can be used as retaining means.

## Claims

1. A measuring device, comprising
a housing (9), which is configured to be inserted into the vagina of an animal and to be removed therefrom after use,
sensing means (25) for measuring at least one physiological parameter of the animal, the sensing means being arranged at least partially in the housing (9), and
transmitting means (13, 25) for a wireless transmission of sensing means data based on the measured physiological parameter to a receiver (50), **characterized by**
retaining means (15), which are configured to be inserted into the vagina and to retain the housing (9) therein.

2. The measuring device according to claim 1, wherein the transmitting means (13, 25) comprise an antenna (13), which extends from the housing (9).

3. The measuring device according to claim 2, wherein the antenna (13) comprises a radiation portion (13c) for emitting radio waves, the radiation portion having a length, which is greater than half of the length of the housing (13) and preferably greater than the length of the housing, and/or
the radiation portion having a mean diameter, which is smaller than the mean diameter of the housing (13) and preferably smaller than half of the mean diameter of the housing.

4. The measuring device according to any one of the preceding claims, wherein the retaining means (15) comprise at least one wing (15a, 15b), which projects laterally over the housing (9) at least when the retaining means are located in the vagina, preferably the retaining means (15) comprise two wings (15a, 15b) for forming a T configuration when located in the vagina.

5. The measuring device according to any one of the preceding claims, wherein the retaining means (15) are elastic for enabling the measuring device to be made slender when introduced into the vagina.

6. The measuring device according to any one of the preceding claims, wherein the retaining means (15) are attached to the housing (9) by means of a releasable connection.

7. The measuring device according to any one of the preceding claims, wherein the housing (9) comprises at least one end member (11, 12) attached by a releasable connection.

8. The measuring device according to any one of the preceding claims, further comprising elastic sealing means (17-19) for preventing the entrance of liquid into the housing (9) .

9. The measuring device according to any one of the preceding claims, further comprising a functional end (13c, 13d), which extends from the housing (9) and outwardly of the vagina when the housing (9) is therein, the functional end (13c, 13d) serving as an antenna (13) for the transmission and/or serving for the extraction of the housing (9) and the retaining means (15) from the vagina.

10. The measuring device according to any one of the preceding claims, further comprising a processing unit (25), which is configured to cause the transmitting means (13, 25) to transmit sensing means data successively in time, wherein the time interval Te between successive transmissions is determined as a function of the measured physiological parameter.

11. The measuring device according to any one of the preceding claims, wherein the sensing means (25) are configured to measure a temperature and wherein preferably a time interval Te between successive transmissions by the transmitting means (13, 25) is increased when the measured temperature goes down under a predetermined threshold.

12. The measuring device according to any one of the preceding claims, further comprising an energy source (30, 31, 32) for supplying the sensing means (25) and/or the transmitting means (13, 25) with energy, wherein the energy source is arranged in the housing (9) and the measuring device is configured such that the energy source is replaceable.

13. System comprising at least one measuring device according to any one of the preceding claims and at least one transceiver (50) portable by the animal.

14. System according to claim 13, wherein the transceiver (50) is configured to send message data which are based on the sensing means data to a portable telephone (56).

15. System according to any one of claims 13 to 14, further comprising an activity sensor for determining the activity of the animal, the transceiver and the activity sensor being preferably arranged in a portable housing.

16. System according to any one of claims 13 to 15, further comprising a collar (51) for holding the transceiver (50).
